# EUROPÄISCHE PATENTSCHRIFT

(11) **EP 0 571 754 B1**
(45) Veröffentlichungstag und Bekanntmachung des Hinweises auf die Patenterteilung: **20.12.1995**
(21) Anmeldenummer: 93106361.4
(22) Anmeldetag: 15.04.1993
(51) Int. Cl.: B27B 25/08, B27B 25/00, B65G 19/02

(54) **Transporteinrichtung für einen in Längsrichtung zu bewegenden Balken**
Transporting device for a beam longitudinally displacable
Dispositif de transport pour une poutre en mouvement longitudinal

(30) Priorität: 29.04.1992 DE 4214057; 03.11.1992 DE 9214929 U
(43) Veröffentlichungstag der Anmeldung: 01.12.1993
(73) Patentinhaber: SCHMIDLER MASCHINENBAU GmbH, D-91180 Heideck (DE)
(72) Erfinder: Schmidler, Richard, W-8548 Heideck (DE); Schmidler, Hans, W-8548 Heideck (DE)

(56) Entgegenhaltungen:
- AT-B- 385 450
- DD-A- 151 129
- DE-A- 1 965 826
- DE-A- 3 423 630
- DE-A- 3 712 303
- US-A- 3 025 097

## Beschreibung

Die Erfindung betrifft eine Transporteinrichtung gemäß dem Oberbegriff des Anspruches 1.

Von den seit langem am Markt eingeführten BURMEK-Transferstationen zur Bearbeitung von Riegelwerken etwa für den Fertighausbau ist es branchenbekannt, die flach auf Rollenbahnen ruhenden fachwerkartigen Holzkonstruktionen dadurch definiert weiterzubefördern, daß von zwei einander gegenüberliegenden Seiten her Stempel quer zur Förderrichtung bewegt werden, die an Laufkatzen oder ähnlichen Transporteinrichtungen gehaltert sind. Dabei dringen vor den Stempeln angeordnete zugespitzte Stangen, sogenannte Dorne, ins angrenzende Holz ein, damit das Werkstück schlupffrei fortbewegt werden kann. Es war an sich naheliegend, genau diesen vertrauten Formschluß (also mittels eines ins Holz eindringenden Dornes) auch dann anzuwenden, wenn es sich bei den Werkstücken nicht um liegende Flächengebilde handelte, sondern um Balken, die z.B. auf einer Abbundanlage in aufeinanderfolgenden Werkzeugstationen für den zimmermannsmäßigen Dachstuhlbau profiliert werden sollen. Weil dabei der Balken auf seinem Vorschubbett ruht ist natürlich nur ein einziger solcher Dorn für den Vorschub erforderlich, der dann von oben in den Balken eingedrückt wird und diesen dadurch mitschleppt. Allerdings sind, wenn solch ein Stempel-Dorn quer zur Vorschubrichtung in den Balken eingreift, die kinetischen Verhältnisse kritisch, weil es beim Vorschub des Balken leicht zu Verkantungen und damit zu Werkstück- oder Maschinenbruch kommen kann. Auch bedarf es des zeitlich-funktionalen und apparativen Zusatzaufwandes für besondere Niederhalter, wenn der Dorn dann wieder aus dem Holzbalken herausgezogen werden soll. Andererseits kann es bei raschem Taktvorschub des Balkens von einer Bearbeitungsstation zur nächsten leicht vorkommen, daß das Eingriffsloch sich in weichem Holz aufweitet und schließlich ganz ausreißt. Dadurch wird nicht nur die Balkenoberfläche noch mehr beschädigt, sondern auch der ganze koordinierte Arbeitsablauf einer Abbundanlage gestört.

Deshalb liegt vorliegender Erfindung die Aufgabe zugrunde, eine wenigstens ebenso einfach aufgebaute aber vielseitiger einsetzbare und doch dabei wesentlich störungsfreier und schonender arbeitende Transporteinrichtung gattungsgemäßer Art zu schaffen.

Diese Aufgabe ist erfindungsgemäß dadurch gelöst, daß die gattungsgemäße Transporteinrichtung gemäß dem Kennzeichnungsteil des Hauptanspruches ausgelegt ist. Ergänzend wird ausdrücklich auf die Unteransprüche, die nachfolgende Zeichnungsbeschreibung und die Zusammenfassung verwiesen.

Nach der erfindungsgemäßen Lösung wird also einer kinetisch stabilen Schleppeinrichtung der Vorzug gegeben. Indem ein mit einem freien Ende am Balken abgestützter Hebel sich spitzwinklig in Vorschubrichtung zum (beispielsweise in einer parallel versetzt oder darüber liegenden Ebene geführten) Schlepporgan erstreckt, können Verkantungen wie bei schiebendem oder auch nur senkrechtem Angriff am mitzuführenden Balken nicht mehr vorkommen. Die Transporteinrichtung weist nun auch nicht mehr den rein formschlüssigen Balken-Angriff eines Eingriffs-Dornes auf, sondern den vorwiegend flächig-kraftschlüssigen Angriff eines aufgedrückten Schleppschuh. Dieser kann je nach den aktuellen Gegebenheiten mit unterschiedlichen Andrucksohlen ausgestattet werden. Der bloße großflächige ebene Andruck erbringt eine spielfreie Verbindung zum nachzuschleppenden Balken, ohne dessen Oberfläche durch formschlüssigen Eingriff zu beschädigen oder Komplikationen beim definierten Vorschub und danach beim Freigeben des Balkens heraufzubeschwören; zumal wenn der Andruck des Hebel gegen den Balken über einen beweglich gelagerten Schleppschuh erfolgt. Denn dann ist ein unverkantet-flächiger Mitnehmer-Andruck unabhängig von der Stärke des Balken sichergestellt, also unabhängig vom momentanen Schleppwinkel zwischen Hebel und Balken.

Die durch die Erfindung ohnehin schon erzielte Mitnahme-Zuverlässigkeit läßt sich noch wesentlich steigern, wenn (insbesondere bei trockenem Holz mit bereits glatt bearbeiteter Oberfläche) gemäß einer erfinderischen Weiterbildung der Hebel-Andruck über eine Andrucksohle in Form eines Haftpolster erfolgt. Bei dem kann es sich um eine wenig kompressible Gummischicht mit saugend-stumpfer Oberfläche handeln. Ein solches Material mit griffiger Oberfläche beruht z.B. auf der Basis von Naturkautschuk. Aber auch synthetisches Gummi ist dafür geeignet, wie es an sich für ganz andere Einsatzzwecke am Markt verfügbar ist. Für hobelrohe und feuchte Oberflächen dagegen, insbesondere wenn sie durch Beschichtung mit Erdreich oder Hobelspänen oder gar infolge Überfrierens rutschig sind, wird der Schleppschuh zweckmäßiger mit einer grob profilierten Andrucksohle ausgestattet. Dabei kann es sich bevorzugt um eine Platte aus Leichtmetall-Spritzguß handeln, aus deren der Montagefläche gegenüberliegenden Fläche eine Vielzahl kurzer Kegel oder Prismen vorsteht. Die durchdringen beim Andruck gegen den Balken die Eis- oder Schmutzschicht, ohne die noch rohe Oberfläche für die Endbearbeitung zu tief zu beschädigen.

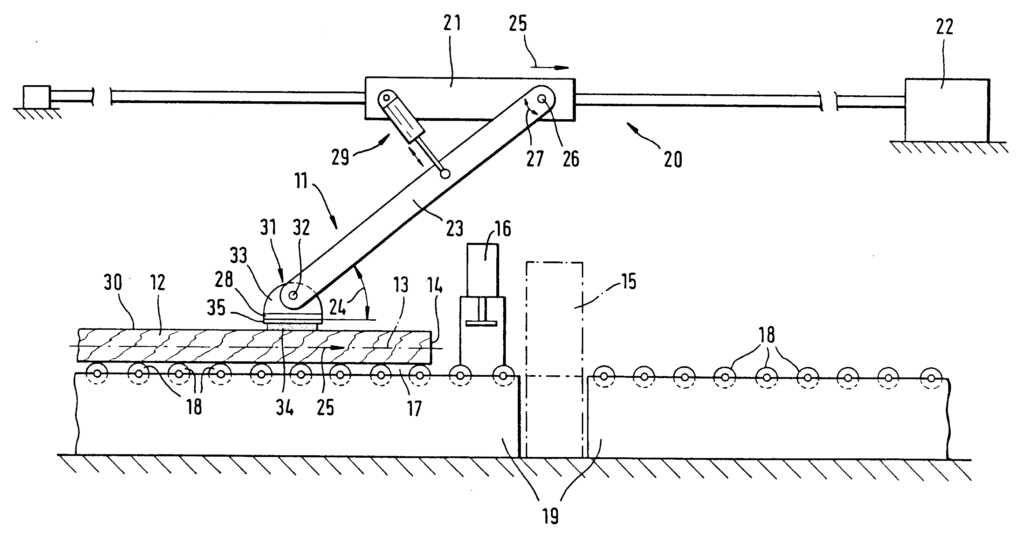

Die Erfindung einschließlich ihrer Weiterbildungen wird nachstehend anhand eines bevorzugten Ausführungsbeispieles näher erläutert. Die einzige Figur der Zeichnung veranschaulicht in stark abstrahierter und nicht ganz maßstabsgerechter Darstellung eine erfindungsgemäße Balken-Transporteinrichtung an einer in abgebrochener Seitenansicht angedeuteten Abbundanlage.

Die dargestellte Transporteinrichtung 11 dient dem gesteuerten Vorschub eines (Holz-) Balken 12 in Richtung seiner Längsachse 13 in eine Position, in welcher dessen Stirnende 14 mittels wenigstens einer Spanneinrichtung 16 definiert bezüglich einer Werkzeugstation 15 festgelegt werden kann, um in vorgegebener Weise z.B. von einer Schwenk-Kapp-Säge, einer Bohreinheit oder einem Fräskopf bearbeitet zu werden. Die Längsbewegung des Balken 12 erfolgt auf einem Vorschubbett 17, bei dem es sich um einen spurgeführten Wagen oder einfach wie dargestellt um eine Rollenbahn 18 auf einem Maschinengestell 19 handeln kann, bezüglich dessem die Werkzeugstation 15 (ggf. mit verschwenkbar einstellbarem Werkzeug) und die Spanneinrichtung 16 ortsfest angeordnet sind.

Ebenfalls ortsfest diesbezüglich verläuft längs des Vorschubbett 17 eine Führungsbahn 20 für ein Schlepporgan 21, etwa ausgebildet als motorgetriebene Laufkatze auf einer feststehenden Schiene oder als Schubmutter auf einer von einem stationären Motor 22 in Drehbewegung versetzbaren Spindel. An dem Schlepporgan 21 ist ein hier einarmig dargestellter Hebel 23 angelenkt, der sich unter spitzem Winkel 24 bezüglich der Vorschubrichtung 25 des Balken 12 zu diesem hin erstreckt. Um die Schwenkachse 26 kann ein Drehmoment 27 wahlweise so zur Wirkung gebracht werden, daß das gegenüberliegende, freie Ende des Hebel 23 mit einem daran vorgesehenen Schleppschuh 28 gegen den Balken 12 andrückt oder von ihm abhebt. Da die Anlenkachse 26 in Vorschubrichtung 25 vor dem Schleppschuh 28 liegt, wird der Balken 12 bei anliegendem Hebel 23 vom Schlepporgan 21 nachgezogen, mit den funktionalen Vorteilen der Vermeidung jeglicher Verkantungsgefahr.

Zum Anlegen oder Abheben des Schleppschuh 28, ibs. am Anfang bzw. am Ende der Rollenbahn 18, kann das Drehmoment 27 von einem hydraulischen oder pneumatischen Schub-Zug-Kolben 29 hervorgerufen werden, der versetzt gegenüber der Schwenkachse 26 angelenkt ist, bei einarmigem Hebel 23 wie in der Zeichnung skizziert zwischen Andruckende 31 und Schwenkachse 26.

Die Vermeidung von die Oberfläche 30 des Balken 12 beschädigendem Formschluß wird, bei zuverlässigerem Kraftschluß zwischen der Transporteinrichtung 11 und dem Balken 12, noch gefördert, wenn der anlageseitig ebene Schleppschuh 28 unabhängig von der momentan gegebenen Stärke des Balken 12, also vom gerade wirksamen Schlepp-Winkel 24, möglichst vollflächig an der ihm zugewandten prismatischen Oberfläche 30 des Balken 12 anliegt. Dafür ist der Schleppschuh 28 seinerseits am Andruckende 31 des Hebel 23 mittels eines Scharnierblech 33 um eine Ausgleichsachse 32 verschwenkbar gehaltert, die parallel zur Oberfläche 30 und quer zur Vorschubrichtung 25 des Balken 12, also parallel zur Schwenkachse 26 des Hebel 23, verläuft.

Eine weitere wünschenswerte Erhöhung der Haftreibung zwischen Transporteinrichtung 11 und Balken 12 läßt sich in apparativ einfacher Weise dadurch sicherstellen, daß der quer zur Vorschubrichtung 25 wirkende Hebel-Andruck mittels einer zusätzlich austauschbar unter den Schleppschuh 28 montierbaren Andrucksohle 35 übermittelt wird. Bei der kann es sich, im Falle eines trockenen glatten Balken 12, um ein Haftpolster 34 mit einer Weichgummi-Schicht aus wenig kompressiblem künstlichem oder natürlichem Material handeln, das unter einer mit dem Schleppschuh 28 verbindbaren Montageplatte festgeklebt, aufvulkanisiert oder z.B. austauschbar eingeklemmt ist. Für verschmutzte oder vereiste, insbesondere rohe, Oberflächen 30 dagegen wird der Schleppschuh 28 zweckmäßiger mit einer Andrucksohle 35 in Form einer grob profilierten Metallplatte ausgestattet, wie eingangs näher abgehandelt.

## Patentansprüche

1. Transporteinrichtung (11) mit Schlepporgan (21) für einen mittels eines, quer zur Vorschubrichtung (25) angreifenden, Mitnehmers schlupffrei in Längsrichtung zu bewegenden Balken (12), dadurch gekennzeichnet,
daß am Schlepporgan (21) ein Hebel (23) angelenkt ist, um dessen Schwenkachse (26) ein Drehmoment (27) einleitbar ist, um ein Andruckende (31) des Hebels (23) in einer Position, die der Vorschubrichtung (25) entgegen hinter seine Schwenkachse (26) versetzt ist, gegen die Oberfläche (30) des Balkens (12) anzulegen oder davon abzuheben.

2. Transporteinrichtung nach Anspruch 1, dadurch gekennzeichnet,
daß das Drehmoment (27) von einem Kolben (29) hervorrufbar ist.

3. Transporteinrichtung nach einem der vorangehenden Ansprüche, dadurch gekennzeichnet,
daß zwischen der Schwenkachse (26) und dem gegenüberliegenden Andruckende (31) eines einarmigen Hebels (23) ein Schwenk-Kolben (29) angreift.

4. Transporteinrichtung nach einem der vorangehenden Ansprüche, dadurch gekennzeichnet,
daß am Andruckende (31) des Hebels (23) ein Schleppschuh (28) vorgesehen ist.

5. Transporteinrichtung nach einem der vorangehenden Ansprüche, dadurch gekennzeichnet,
daß am Andruckende (31) des Hebels (23) eine zur Schwenkachse (26) parallele Ausgleichsachse (32) für einen zur großflächigen Anlage beweglichen Schleppschuh (28) vorgesehen ist.

6. Transporteinrichtung nach einem der vorangehenden Ansprüche, dadurch gekennzeichnet,
daß ein Schleppschuh (28) am Andruckende (31) des Hebel (23) mit unterschiedlichen Andrucksohlen (35) ausstattbar ist.

7. Transporteinrichtung nach Anspruch 6, dadurch gekennzeichnet,
daß die Andrucksohle (35) mit einem Haftpolster (34) ausgestattet ist.

8. Transporteinrichtung nach Anspruch 7, dadurch gekennzeichnet,
daß das Haftpolster (34) aus wenig kompressiblem gummiartigem Material mit einer hohe Haftreibung vermittelnden Oberfläche ausgestattet ist.

9. Transporteinrichtung nach Anspruch 6, dadurch gekennzeichnet,
daß die Andrucksohle (35) grob profiliert ist.

## Claims

1. A transport apparatus (11) with drag member (21) for a beam (12) which is to be moved in a slip-free manner in the longitudinal direction by way of an entrainment member which engages the beam transversely to the forward feed direction (25), characterized in that pivotably connected to the drag member (21) is a lever (23), about whose pivot axis (26) a torque (27) can be applied in order to apply a pressure-application end (31) of the lever (23) against the surface (30) of the beam (12) or to lift said end (31) from the surface (30) of the beam (12), in a position which is displaced in opposite relationship to the forward feed direction (25) behind the pivot axis (26) of the lever (23).

2. A transport apparatus according to claim 1 characterized in that the torque (27) can be produced by a piston (29).

3. A transport apparatus according to one of the preceding claims characterized in that a pivoting piston (29) acts between the pivot axis (26) and the oppositely disposed pressure-application end (31) of a single-arm lever (23).

4. A transport apparatus according to one of the preceding claims characterized in that a drag shoe (28) is provided at the pressure-application end (31) of the lever (23).

5. A transport apparatus according to one of the preceding claims characterized in that provided at the pressure-application end (31) of the lever (23) is a compensating axis (32), which is parallel to the pivot axis (26), for a drag shoe (28) which is movable for providing contact over a large area.

6. A transport apparatus according to one of the preceding claims characterized in that a drag shoe (28) at the pressure-application end (31) of the lever (23) can be fitted with different pressure-application soles (35).

7. A transport apparatus according to claim 6 characterized in that the pressure-application sole (35) is provided with an adhesion cushion (34).

8. A transport apparatus according to claim 7 characterized in that the adhesion cushion (34) comprises rubber-like material of low compressibility, with a surface affording a high level of adhesive friction.

9. A transport apparatus according to claim 6 characterized in that the pressure-application sole (35) is coarsely profiled.

## Revendications

1. Dispositif transporteur (11) comportant un organe de traction (21) pour une poutre (12) qui doit être déplacée dans le sens longitudinal sans qu'elle patine, au moyen d'un entraîneur agissant transversalement au sens de l'avance (25), caractérisé en ce que, sur l'organe de traction (21), est articulé un levier (23), autour de l'axe de pivotement (26) duquel on peut faire agir un couple de rotation (27) afin d'appliquer une extrémité de pression (31) du levier (23), dans une position décalée en arrière de son axe de pivotement (26) dans le sens de l'avance (25), contre la surface (30) de la poutre (12), ou pour l'en dégager.

2. Dispositif transporteur selon la revendication 1, caractérisé en ce que le couole de rotation (27) peut être produit par un piston (29).

3. Dispositif transporteur selon l'une des revendication précédentes, caractérisé en ce qu'un piston pivotant (29) agit entre l'axe de pivotement (26) et l'extrémité de pression (31) opposée d'un levier à un seul bras (23).

4. Dispositif transporteur selon l'une des revendications précédentes caractérisé en ce qu'on prévoit un patin de traction (28) à l'extrémité de pression (31) du levier (23).

5. Dispositif transporteur selon l'une des revendications précédentes caractérisé en ce qu'on prévoit à l'extrémité de pression (31) du levier (23) un axe d'alignement (32) parallèle à l'axe de pivotement (26) pour un patin de traction (28) qui peut être déplacé pour un contact surfacique.

6. Dispositif transporteur selon l'une des revendications précédentes, caractérisé en ce qu'un patin de traction (28) à l'extrémité de pression (31) du levier (23) peut être équipé de différentes semelles de pression (35).

7. Dispositif transporteur selon la revendication 6, caractérisé en ce que la semelle de pression (35) est équipée d'un coussin adhésif (34).

8. Dispositif transporteur selon la revendication 7, caractérisé en ce que le coussin adhésif (34) en matériau du type caoutchouc peu compressible comporte une surface procurant une forte adhérence.

9. Dispositif transporteur selon la revendication 6, caractérisé en ce que la semelle de pression (35) est grossièrement profilée.
